# EUROPEAN PATENT APPLICATION

(11) **EP 0 761 364 A2**
(43) Date of publication of application: **12.03.1997**
(21) Application number: 96306550.3
(22) Date of filing: 10.09.1996
(51) Int. Cl.: B23K 9/32

(54) **Engine driven welder**

(30) Priority: 11.09.1995 US 526495
(71) Applicant: MILLER ELECTRIC MANUFACTURING COMPANY, Appleton, Wisconsin 54914 (US)
(72) Inventor: Latvis, Steven D., Appleton, Wisconsin (US); Borchardt, Ross C., Hortonville, Wisconsin (US)
(74) Representative: Rackham, Stephen Neil

(57) **Abstract**

An engine driven welding machine (1) has two paths of cooling air (33,36) flowing therethrough that are segregated from one another. Both paths (33,36) have their inlets (35,68) at the electrical end (2) of the welding machine (1), and both paths (33,36) have their exhausts (69,77) at the engine end (4). The first path (33) directs air through a passage containing a rectifier (29) and into a blower housing (49). The blower housing (49) divides the first path (33) into a first portion (33A) that supplies combustion air to the engine (27). A second portion (33B) of the first path directs air over outer walls of the engine block (27) and head and into a hot air exhaust box (67), from which the air leaves through exhaust outlet (69). The second path (36) directs air over a stabilizer and into a generator (26). From the generator (26), the second path (36) leads to an engine compartment (25), from which the air leaves through exhaust outlet (77). The first and second paths (33,36) direct the cooling air through multiple turns that reduce machine noise.

## Description

This invention pertains to heat transfer, and more particularly to cooling and noise suppression of engine driven welding machines.

Engine driven welding machines produce considerable heat. Sources of the heat include the engine as well as various electrical components such as rectifiers, stabilizers, and generators. For effective operation of the welding machine, sufficient heat must be removed to keep the engine and electrical components at proper operating temperatures. The rectifier, stabilizer, and generator are usually the most critical electrical components from the cooling standpoint, because the output of the welding machine is limited by the rise in temperature of these components.

Some prior machines utilized different fans to produce separate air flows through the engine and electrical compartments. Other prior machines were designed such that the entire machine formed a single air-cooled plenum.

The prior cooling efforts were not completely satisfactory. Many of the air flow paths were quite short between intake and exhaust, with the result that some spaces of the compartments were not adequately cooled.

A related deficiency of the air cooling systems of prior welding machines concerned noise. The primary source of noise in an engine driven welding machine is caused by the mechanical and combustion noise of the engine. To a lesser degree, the generator also creates noise, especially its fan. Some of the mechanical and combustion noise of the engine can radiate through the cylinder walls and head into the engine compartment, and this noise needs to be either muffled or contained. In addition, this noise, especially the valve and combustion noise, can travel back up the intake manifold and through the air cleaner or intake passageway and out to the atmosphere. This is potentially a major source of noise.

The earliest way of cooling an engine driven welding machine was to leave it open to the atmosphere. In an attempt to reduce the noise, a box was built around the machine. Unfortunately, the box inhibited cooling and intake combustion air flow such that the welder could not be cooled or run efficiently. Accordingly, ducts were incorporated into the box in order to introduce air for combustion and cooling. However, the ducts allowed the escape of noise, unless the ducts were positioned and routed in such a way that the noise that was generated at one end of the ducts was reduced inside them. The ducts of prior welding machines were often too short and straight to have much success in reducing noise.

According to a first aspect of this invention an engine driven welding machine having a base, an electrical end, an engine end, and an internal combustion engine mounted on the base near the engine end, and cooling means for cooling and quieting the welding machine, the cooling means comprises:
a. first air path means extending from the welding machine electrical end to the engine end for directing cooling air to cool first selected components inside the welding machine; and
b. second air path means extending from the welding machine electrical end to the engine end and segregated from the first path means for directing cooling air to cool second selected components inside the welding machine.

In accordance with the present invention, a segregated cooling air flow is provided that effectively and quietly cools engine driven welding machines by directing cooling air along two separate paths with each path flowing over both engine and electrical components.

In a particular example both air paths have their inlets at an electrical end of the welding machine, and both paths exhaust from an engine end of the machine. The first path begins with a passage that contains an electrical rectifier. The passage continues to a divider wall between an engine compartment and an electrical compartment through a channel or recess in the engine fuel tank. At the end of the recess in the fuel tank, the passage connects to the inlet of a blower housing located in the engine compartment The blower housing divides the first path in two. A first portion of the first path flows to the engine intake filter and intake manifold for combustion air. The products of combustion pass through a muffler and exhaust out the engine end of the welding machine.

A second portion of the first path flows from the blower housing to an engine shroud. A blower that is part of the engine is located in the engine shroud. The engine blower draws the air along the first path from the inlet thereof to the engine shroud. The engine shroud covers various channels in the outer walls of the cylinder block and head of the engine. The engine blower pushes the air through the engine channels and over the combustion heads into a hot air exhaust box. In the hot air exhaust box, the second portion of the first cooling air path passes over the exhaust manifold, over the muffler, and exhausts out the engine end of the machine through one set of louvers.

The second path of cooling air has its inlet at an electrical compartment at the electrical end of the welding machine. A stabilizer for the welding power circuit is located near the second path inlet. Various baffles and deflectors assure that air also passes over all the other components in the electrical compartment. A generator is located in the divider wall. A generator fan draws the air along the second path through the electrical compartment to the generator. Most of the air flows through the interior of the generator for its entire length. Some air flows over the outside of the generator and enters its interior through radial slots in the generator barrel. The generator fan pushes all the air into the engine compartment. The air flows over a part of the engine and exhausts from the machine engine end through a second set of louvers. In that manner, air flows in two discrete paths for the full length of the welding machine. The two paths do not mix within the machine, although they do cross over one another within the engine compartment.

It is a feature of the present invention that the cooling air also serves to reduce the noise of the engine driven welding machine. The air paths are designed with numerous bends. The bends diminish the propagation of noise through the air paths upstream and downstream from the sources of noise without restricting air flow.

According to a second aspect of this invention a method of cooling and quieting an engine driven welding machine having first and second ends comprises the steps of:
a. directing first cooling air in a downstream direction along a first multi-turn path from a first inlet at the welding machine first end to a first exhaust at the welding machine second end and thereby cooling and quieting first selected components inside the welding machine located along the first path; and
b. directing second cooling air in a downstream direction along a second multi-turn path segregated from the first path from a second inlet at the welding machine first end to a second exhaust at the welding machine second end and thereby cooling and quieting second selected components inside the welding machine located along the second path.

The method and apparatus of the invention, using segregated cooling air flows, thus cools and quiets the engine and electrical components of an engine driven welding machine in an efficient manner. By locating the electrical components, particularly the stabilizer and the rectifier, at the inlet ends of separate air paths, cool ambient air cools those components very effectively. The probability of any components of the welding machine overheating is remote, even though numerous heat producing components are incorporated into the machine.

A particular example of an engine driven welder in accordance with the present invention will now be described with reference to the accompanying drawings; in which:-
Fig. 1 is a perspective view of an engine driven welding machine, viewed from the electrical end;
Fig. 2 is perspective view of the welding machine of Fig. 1 viewed from the engine end;
Fig. 3 is an exploded broken view of the welding machine schematically showing the segregated cooling air flow, and,
Fig. 4 is an exploded perspective view of the blower housing, engine, and hot air exhaust box schematically showing the air flow therethrough.

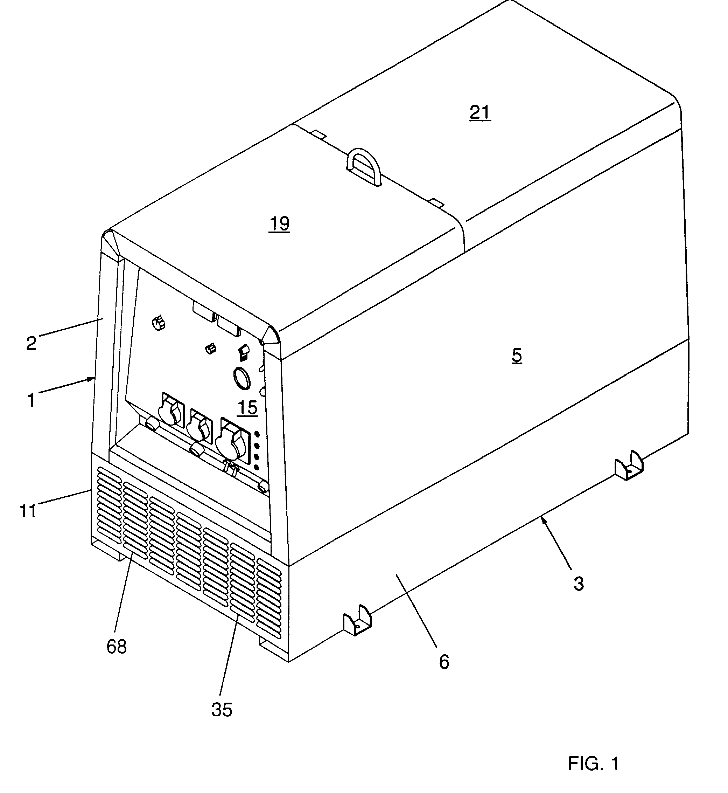

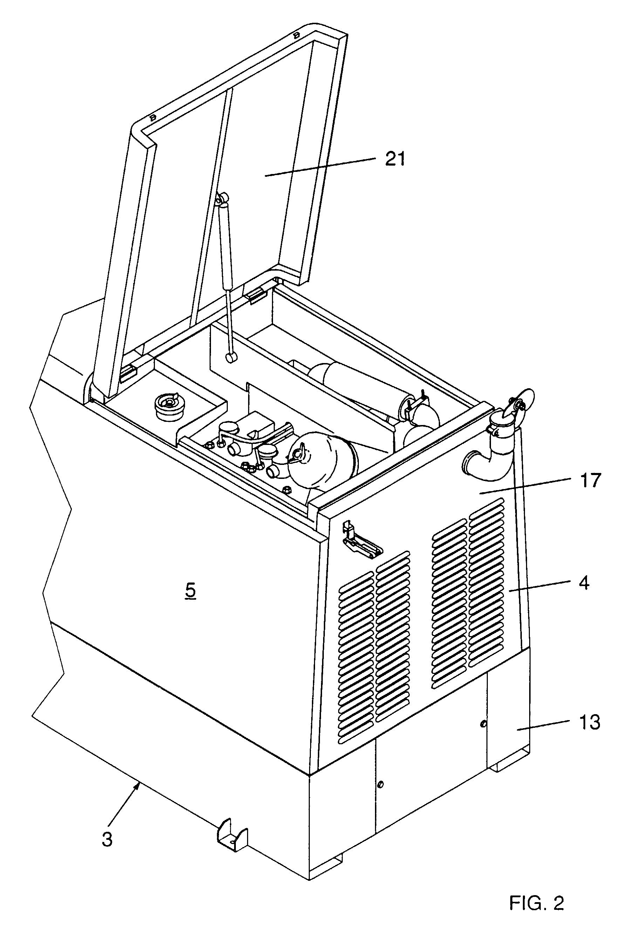

Referring to Figs. 1-3, an engine driven welding machine 1 is illustrated that includes the present invention. The welding machine 1 has a first end 2 that will be referred to as the electrical end, and a second end that will be referred to as the engine end. The welding machine has a base 3 that extends for the full length of the machine. The base 3 has a floor 37, two side covers 6 and 8, a base electrical end cover 11, and a base engine end cover 13.

The base 3 supports side panels 5 and 7, an electrical end panel 15, an engine end panel 17, and top covers 19 and 21. A divider wall 23 extends between the base floor 37, base side covers 6 and 8, and side panels 5 and 7 to the top covers 19 and 21. A horizontal plate 39 extends between the base covers 6, 8, and 11 and the divider wall 23. There is an opening 72 in the horizontal plate 39 near the divider wall. A vertical plate 41 extends from the divider wall to the base end cover 11 between the horizontal plate 39 and the base floor 37. The divider wall 23, base covers 8 and 11, panels 5, 7, and 15, vertical plate 41, horizontal plate 39 between the vertical plate 41 and the base side cover 6, and the top cover 19 define an L-shaped electrical compartment 22 of the welding machine 1. Well known electrical components, generally represented by reference numeral 24, are housed in the electrical compartment 22. A generator 26 is located in an opening through the divider wall 23. One end of the generator 26 protrudes into the electrical compartment.

An internal combustion engine 27, which may be gasoline or diesel, is mounted to the machine base 3 between the divider wall 23 and the engine end panel 17. The engine 27 drives the generator 26, which in turn supplies electrical power to the electrical components 24 for ultimately producing welding power.

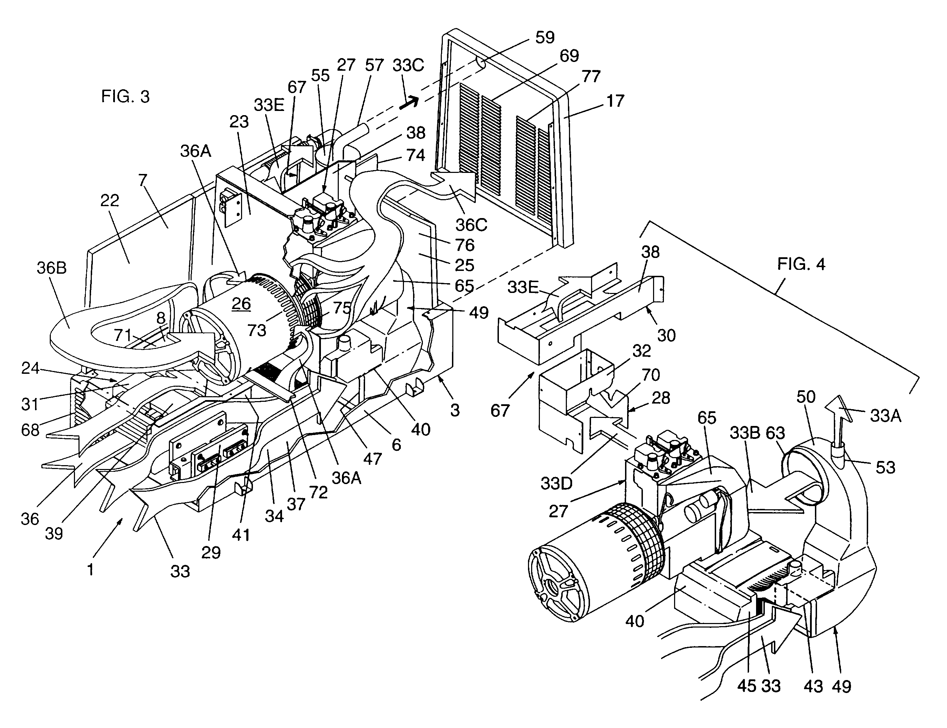

In accordance with the present invention, the welding machine 1 is cooled and quieted by a segregated cooling system that properly balances the cooling requirements of the various electrical components 24 and the engine 27. For that purpose, the interior of the welding machine between the divider wall 23 and the engine end panel 17 is divided into an engine compartment 25 and a hot air exhaust box 67. Looking also at Fig. 4, the hot air exhaust box 67 is composed of a first duct 28 and a second duct 30. The ducts 28 and 30 have respective panels 32 and 38 that together form a horizontal and vertical plenum panel that extends between the divider wall and the engine end panel. The base covers 6 and 13, panels 5 and 17, divider wall 23, top cover 21, and duct vertical panels 32 and 38 define the engine compartment 25. The engine 27 is mounted in the engine compartment 25.

The four most critical components of the welding machine 1 from the cooling standpoint are the generator 26, the engine 27, and a rectifier 29 and a stabilizer 31 that are part of the electrical components 24. Proper cooling is provided to the foregoing components by two separate and independent paths 33 and 36 of cooling air flowing through the welding machine. Both paths 33 and 36 begin at the machine electrical end 2, and both paths end at the machine engine end 4. The inlet for the first path 33 is through louvers 35 in the base electrical end cover 11. The beginning of the first path 33 is a horizontal passage 34 that is defined by the base floor 37, base side cover 6, horizontal plate 39, and vertical plate 41. The rectifier 29 is attached to the base floor in the passage 34 at the end of the first path 33.

The passage 34 continues along a channel or recess in the engine fuel tank 40. For the length of the fuel tank 40, two sides of the passage 34 are formed by the base floor 37 and side wall 6. The two other sides of the passage are formed by a horizontal wall 43 and a vertical wall 45 of the recess in the fuel tank. The passage 34 terminates at the inlet end 47 of a blower housing 49, which is located in the engine compartment 25. The blower housing inlet end 47 fits into the fuel tank recess.

The blower housing 49 directs the first path 33 from the horizontal passage 34 into a vertical direction. At the outlet end 50 of blower housing are two outlet ports 53 and 63, such that the first air path divides in two. A first portion 33A leaves the blower housing through the vertically oriented first port 53. The port 53 is connected to an engine air cleaner, not illustrated but well known in the internal combustion engine arts. vacuum produced by the engine 27 draws the air first portion 33A from the blower housing into the engine air cleaner. The first portion 33A serves as combustion air for the engine and thus passes from the air cleaner to the engine intake manifold. The convoluted paths 33 and 33A also serve to reduce the engine valve and combustion noise that travels up the intake manifold and air cleaner. The first portion 33A of the first path ultimately flows into an engine muffler 55. A muffler exhaust pipe 57 vents through the engine end panel 17 by means of an exhaust port 59, as is indicated by path 33C.

A second and major portion 33B of the first air path 33 is redirected horizontally by the blower housing 49 through the second outlet port 63. The second port 63 is resiliently connected to the inlet of an engine shroud 65. A blower, which is a standard part of the engine 27, is located inside the shroud 65. It is the operation of the engine blower and combustion air intake that creates a vacuum to draw air along the first path 33 through the passage 34 and blower housing 49. To allow for engine vibrations and deflections and to minimise any drumming effect of noise associated with the blower housing, the inner surface of its outlet port 63 contacts an acoustical padding. The outlet port 63 fits around the padded inlet of the engine blower shroud 65 to form a foam seal that does not transmit engine vibrations.

The second portion 33B of the first path 33 passes generally horizontally through several different channels in the outer walls of the cylinder block and head of the engine 27 that are covered by the engine shroud 65. When passing through the various engine channels, the air cools the combustion heads and cylinders of the engine. After leaving the engine channels, the air flows through an opening 70 in the duct 28 and enters the hot air exhaust box 67, as is indicated by path 33D, where it cools the exhaust manifold. The hot air exhaust box 67 is segregated from the engine compartment 25 by the panel 38 and by a vertical wall 74 that abuts the engine end panel 17. The second portion of the first path then flows through the ducts 28 and 30, as is indicated by path 33E. The duct 28 is attached to the engine and vibrates with it. The duct 30 is mounted to the machine frame and thus is stationary. There is a foam seal between the two ducts. From the duct 30, the path 33E flows downwardly over the muffler and exhausts through louvers 69 in the left side of the engine end panel 17. The numerous bends of the paths 33B, 33D, and 33E reduce the mechanical and combustion noise of the engine that radiates through the cylinder block walls and head.

Thus, all the air in the first path 33 cools the rectifier 29. Then the first path divides in two to supply combustion air to the engine 27 with the first portion 33A, and to cool and quiet the combustion heads of the engine with the second portion 33B. The combustion air 33A leaves the welding machine 1 via the muffler 55 as path 33C. The engine exterior cooling air 33B flows into the hot air exhaust box 67 as path 33D and exhausts from the hot air exhaust box through the engine end panel 17 as path 33E.

The inlet for the second air path 36 is through louvers 68 in the base electrical end cover 11. The beginning of the second path is a bottom section 71 of the electrical compartment 22. The bottom section 71 is defined by the base floor 37 and side wall 8, the vertical plate 41, the horizontal plate 39, and the divider wall 23. The stabiliser 31 is secured to the base floor in the electrical compartment bottom section 71 and thus is at the upstream end of the second path 36.

The air of the second path 36 then flows upwardly through an opening 72 in the horizontal plate 39 into an upper section of the electrical compartment. Upon reaching the electrical compartment upper section, the path 36 divides in two. A first portion, indicated by paths 36A, enters radial slots 73 in the barrel of the generator 26. A second portion, indicated by path 36B, flows into the end of the generator barrel. The two portions 36A and 36B rejoin and mix inside the generator. A fan inside the generator creates the vacuum that draws the air along the paths 36, 36A, and 36B. The fan pushes the remixed air through outlets 75 in the generator as a single path 36C. The generator outlets 75 are located in the engine compartment 25. The engine path 36C flows over various engine components, including the shroud 65, in the engine compartment. The path 36C must then flow up and over a padded interior wall 76 so that the engine 27 is not in the line of sight with the exhaust louvers 77. The path 36C exhausts from the welding machine 1 through the louvers 77 in the right side of the engine end panel 17. The paths 36A, 36B, and 36C change direction so as to reduce noise produced by the generator fan and the engine, which could exit the welding machine 1 were they straight line paths.

In summary, the engine driven welding machine 1 is cooled and quieted by two segregated paths of air flowing through it. All the air of the first path 33 first cools the rectifier 29 at the upstream end of that path. Downstream of the rectifier, the first path divides. A first portion 33A, 33C serves as combustion air for the engine 25. A second portion 33B, 33D, 33E flows over the combustion heads and outer wall of the cylinder block of the engine, through the ducts 28 and 30 of the hot air exhaust box 67, and out the left side of the engine end panel 17. All the air of the second path 36 first cools the stabiliser 31 inside the welding machine electrical compartment 22. The second path then enters the generator 26 as two portions 36A and 36B. The two portions 36A and 36B rejoin inside the generator, and leave the generator as a single path 36C. The path 36C flows through the engine compartment 25 and out the right side of the engine end panel 17. In that manner, the rectifier, stabilizer, generator, and engine, which are the critical ccmponents of the welding machine from the cooling standpoint, are all adequately cooled, while simultaneously the welding machine produces minimal noise.

## Claims

1. An engine driven welding machine (1) having a base (3), an electrical end (2), an engine end (4), and an internal combustion engine (27) mounted on the base (3) near the engine end (4), and cooling means for cooling and quieting the welding machine (1), the cooling means comprising:
a. first air path means (33) extending from the welding machine electrical end (2) to the engine end (4) for directing cooling air to cool first selected components inside the welding machine; and
b. second air path means (36) extending from the welding machine electrical end (2) to the engine end (4) and segregated from the first path means (33) for directing cooling air to cool second selected components inside the welding machine (1).

2. A welding machine according to claim 1, wherein the first path means comprises:
a. a first inlet (69) at the welding machine electrical end (2);
b. passage means (34) for directing air downstream from the first inlet (69);
c. housing means (49,50,63,28) for directing air downstream from the passage means (34)
d. a hot air exhaust box (67) downstream from the housing means; and
e. first exhaust means (69) for exhausting air from the hot air exhaust box (67) at the engine end (4).

3. A welding machine according to claim 2, further including blower means for drawing air through the first inlet (69), the passage means (34) and housing means and for pushing the air downstream through the exhaust box (67) and first exhaust means (69).

4. A welding machine according to claim 2 or 3, wherein the housing means (4a) divides the first path means (33) into two portions, a first portion (33A) flowing to the engine (27) as combustion air, and a second portion (33B) flowing to the exhaust box (67).

5. A welding machine according to claim 2, 3 or 4, which also includes a rectifier (29) located in the passage (34) near the electrical end (2), so that the rectifier (29) is cooled by cooling air directed along the first path (33) immediately after air enters the first path (33) through the inlet (35).

6. A welding machine according to claims 2, 3, 4 or 5, wherein:
a. the engine driven welding machine includes a fuel tank (40) for the engine (27); and
b. the passage (34) is defined for a predetermined length thereof by the cooperation of a recess in the fuel tank (40) and by the base (30).

7. A welding machine according to any of the preceding claims, wherein the second path means (36) comprises:
a. a second inlet (35) at the electrical end (2);
b. an electrical compartment (22) downstream from the second inlet (35);
c. fan means (26) for drawing air through the second inlet (35) and the electrical compartment (22) and for pushing the air downstream from it;
d. an engine compartment (25) downstream from the fan means (26); and,
e. second exhaust means (77) for exhausting air from the engine compartment (25) at the engine end (4).

8. A welding machine according to claim 7, wherein:
a. the fan means comprises a generator (26) located between the electrical compartment (22) and the engine compartment (25), the generator (26) having a barrel with an open end and radial slots located within the electrical compartment (22) ;
b. air flowing along the second path (36) divides within the electrical compartment (22) to enter the generator (26) through the barrel open end and through the radial slots (73); and
c. the air of the second path (36) flows from the generator (26) as a single path (36C) into the welding machine engine compartment (25).

9. A welding machine according to claims 7 or 8, wherein also includes a stabilizer (31) located in the electrical compartment (22) near the electrical end (2), so that the stabilizer (31) is cooled by cooling air directed along the second path (36) means immediately after air enters the second path means through the inlet (35).

10. A method of cooling and quieting an engine driven welding machine having first and second ends comprising the steps of:
a. directing first cooling air in a downstream direction along a first multi-turn path from a first inlet at the welding machine first end to a first exhaust at the welding machine second end and thereby cooling and quieting first selected components inside the welding machine located along the first path; and
b. directing second cooling air in a downstream direction along a second multi-turn path segregated from the first path from a second inlet at the welding machine first end to a second exhaust at the welding machine second end and thereby cooling and quieting second selected components inside the welding machine located along the second path.

11. The method of claim 10 wherein the step of directing first cooling air along a first path comprises the steps of
a. directing first cooling air from the first inlet over an electrical rectifier in the first path;
b. directing the first cooling air over the exterior of an engine downstream of the rectifier;
c. directing the first cooling air to a hot air exhaust box downstream of the engine; and
d. directing the first cooling air out of the hot air exhaust box through the first exhaust.

12. The method of claim 11 wherein the step of directing the first cooling air over the exterior of an engine comprises the step of:
a. dividing the first cooling air into first and second portions downstream of the rectifier and upstream of the engine;
b. directing the first portion of the first cooling air to the engine as combustion air; and
c. directing the second portion of the first cooling air over selected outer means of the engine block and head.

13. The method of claims 10, 11 or 12, wherein the step of directing second cooling air along a second path comprises the steps of:
a. directing second cooling air from the second inlet over an electrical stabilizer in the second path;
b. directing the second cooling air through a generator downstream of the stabilizer;
c. directing the second cooling air into an engine compartment downstream of the generator; and
d. directing the second cooling air out of the engine compartment through the second exhaust.
